# EUROPEAN PATENT SPECIFICATION

(11) **EP 3 689 719 B1**
(45) Date of publication and mention of the grant of the patent: **15.12.2021**
(21) Application number: 19382062.8
(22) Date of filing: 30.01.2019
(51) Int. Cl.: B62D 35/00, B62D 35/02

(54) **AERODYNAMIC DEVICE FOR A MOTOR VEHICLE**
AERODYNAMISCHE VORRICHTUNG FÜR EIN KRAFTFAHRZEUG
DISPOSITIF AÉRODYNAMIQUE POUR UN VÉHICULE À MOTEUR

(43) Date of publication of application: 05.08.2020
(73) Proprietor: Batz, S.Coop., 48140 Igorre (ES)
(72) Inventor: BENGOECHEA LUACES, Lexuri, 48007 BILBAO (ES); IBAÑEZ MOREIRA, Jesús, 48160 DERIO (ES)
(74) Representative: Igartua, Ismael

(56) References cited:
- EP-A1- 1 040 985
- DE-A1-102006 009 681
- FR-A1- 3 061 124
- US-A1- 2017 120 967
- US-A1- 2017 355 403

## Description

### TECHNICAL FIELD

The present invention relates to aerodynamic devices for a motor vehicle and motor vehicles incorporating said aerodynamic device.

### PRIOR ART

Aerodynamic devices for motor vehicles are known. FR2897038A1 describes an aerodynamic device for a wheel housing of a vehicle comprising a flap movable between an extended position and a retracted position, a rotating actuator, and a transmission mechanism coupled to the actuator and configured for transmitting the movement of the actuator to said flap.

One problem affecting these aerodynamic devices is that the flap in the extended position is subject to the risk of collision with obstacles which may be present in regular transit, such as curbs, garbage, blocks of ice, or even small animals. This is why solutions have been proposed in the past.

For example, US2017/0355403A1 describes a front spoiler arrangement comprising a flow guiding component movable between an extended position and a retracted position, a rotating actuator and a coupling element between the flow guiding component and the actuator. In the event of impact, the flow guiding component decouples from the coupling element, allowing relative movement of the flow guiding component with respect to the actuator, the front spoiler being arranged in the emergency position until the actuator couples said guiding component again.
Moreover, US 2017/120967 A discloses an aerodynamic device according to the preamble of claim 1.

### DISCLOSURE OF THE INVENTION

The object of the invention is to provide an aerodynamic device for a motor vehicle and a motor vehicle, as defined in the claims.

A first aspect of the invention relates to an aerodynamic device for a motor vehicle, comprising a flap movable between an extended position and a retracted position, a rotating actuator, and a transmission mechanism coupled to the actuator and configured for transmitting the movement of the actuator to the flap.

The aerodynamic device is configured for preventing the actuator and/or the transmission mechanism from being damaged in the event that the flap receives an impact with a vertical force component when said flap is arranged in the extended position. To that end, the flap comprises a fixed portion coupled to the transmission mechanism and a mobile portion coupled to the fixed portion in a manner that is movable between a normal operation position and an emergency operation position.

The aerodynamic device further comprises an over-center spring coupling the fixed portion and the mobile portion of the flap, exerting a force on the mobile portion such that said mobile portion is maintained in one of the operation positions. The over-center spring allows the movement of the mobile portion of the flap to the emergency position when the mobile portion receives an impact with a vertical force component exceeding a force threshold of the over-center spring.

A second aspect of the invention relates to a motor vehicle comprising an aerodynamic device such as the one defined above.

The aerodynamic device of the invention provides a simple and compact solution. Furthermore, in the aerodynamic device of the invention the flap stays in a stable position after sustaining an impact. Therefore, the aerodynamic device does not generate annoying noises when the mobile portion is in the emergency operation position.

These and other features and advantages of the invention will become apparent in view of the drawings and detailed description of the invention.

### DESCRIPTION OF THE DRAWINGS

Figure 1 shows a perspective view of an embodiment of the aerodynamic device of the invention in a wheel housing, wherein the flap is in the extended position.
Figure 2 shows a perspective view of the aerodynamic device of Figure 1, wherein the flap is in the extended position, with the mobile portion in the normal operation position.
Figure 3 shows a perspective view of the aerodynamic device of Figure 1, wherein the flap is in the retracted position.
Figure 4 shows a perspective view of the aerodynamic device of Figure 1, wherein the flap is in the extended position, with the mobile portion in the emergency position.
Figure 5 shows a side section view of the aerodynamic device of Figure 1, wherein the flap is in the extended position, with the mobile portion in the normal operation position.
Figure 6 shows a side section view of the aerodynamic device of Figure 1, wherein the flap is in the extended position, with the mobile portion in the emergency position.
Figure 7 shows a side section view of the aerodynamic device of Figure 1, wherein the flap is in the retracted position.
Figure 8 shows a detailed view of the flap of the aerodynamic device of Figure 1, with the mobile portion in the normal operation position.
Figure 9 shows a detailed view of the flap of the aerodynamic device of Figure 1, with the mobile portion in the emergency position.
Figure 10 shows a detailed view of the transmission system of the aerodynamic device of Figure 1.

### DETAILED DISCLOSURE OF THE INVENTION

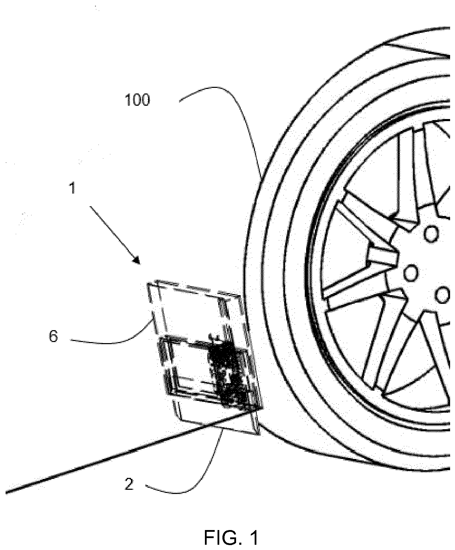

Figures 1 to 10 show an embodiment of the aerodynamic device 1 of the invention.

The aerodynamic device 1 of the invention can be arranged, for example, in the wheel housing 100 of a vehicle. The wheel housing 100 of a vehicle is the portion of the chassis around the opening in which each of the wheels of said vehicle is arranged, as partially shown in Figure 1.

In other embodiments not shown in the drawings, the aerodynamic device 1 of the invention can be arranged in other positions such as, for example, on the bumper, as a front spoiler.

As shown in Figure 1, the aerodynamic device 1 of this embodiment is arranged in a wheel housing 100 of a vehicle and comprises a flap 2 movable between an extended position and a retracted position, and a casing 6 configured for housing the flap 2. The casing 6 is arranged facing the wheel housing and can be part of the chassis or a separate part fixed to the chassis.

Extended position means that position in which part of the flap 2 projects from the wheel housing 100, positioned facing the wheel and opposing the air reaching it from the front part of the vehicle, as can be seen in Figures 1, 2, and 5. This position allows improving vehicle aerodynamics and reducing fuel consumption, and therefore also reducing the contaminating emissions of the vehicle. The flap 2 should ideally be located in the extended position when the vehicle is traveling at high speeds.

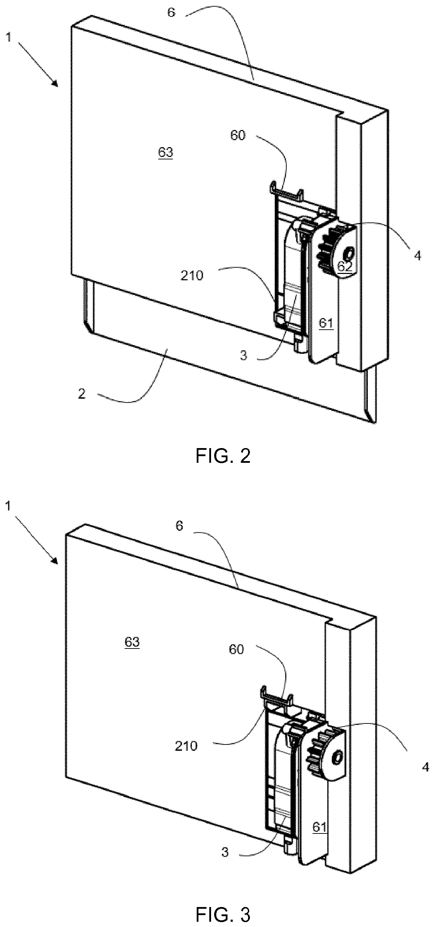

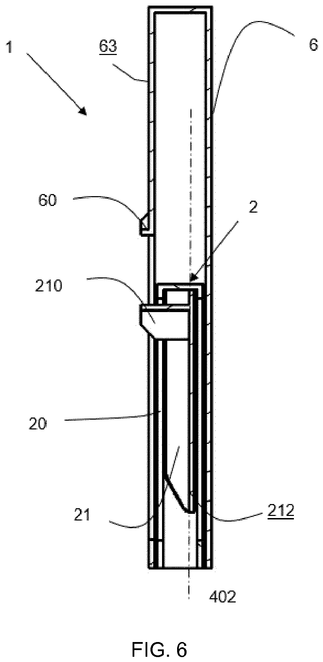

Retracted position means that position in which the flap 2 is housed inside the wheel housing 100 of the vehicle or minimally projects from said wheel housing 100, as can be seen in Figures 3 and 6. The flap 2 should ideally be located in said retracted position when the vehicle is traveling at low speeds or over terrains with obstacles.

When the aerodynamic device is arranged in another position of the motor vehicle, such as in the case of a front spoiler, for example, likewise, extended position means that position in which the flap projects from the motor vehicle opposing to the air reaching it to improve its aerodynamics, and retracted position means that position in which the flap is housed inside or minimally projects from the motor vehicle.

The aerodynamic device 1 of this embodiment also comprises an actuator 3 and a transmission mechanism 4 coupled to the actuator 3. The transmission mechanism 4 is configured for transmitting the movement of the actuator 3 to the flap 2. Furthermore, the flap 2 of the aerodynamic device 1 of the invention comprises a fixed portion 20 coupled to the transmission mechanism 4 and a mobile portion 21 coupled to the fixed portion 20 movable between two stable operation positions: a normal operation position and an emergency operation position.

Normal operation position of the flap 2 refers to that in which the mobile portion 21 projects from the fixed portion 20, such that in the extended position of the flap 2 the mobile portion 21 projects from the wheel housing 100. Emergency operation position refers to that in which the mobile portion 21 is arranged fundamentally overlapping the fixed portion 20, such that even in the extended position of the flap 2, the mobile portion 21 is housed inside the wheel housing 100 of the vehicle or minimally projects from said wheel housing 100. When the flap 2 is in the extended position, the mobile portion 21 may adopt either of the two operation positions. However, when the flap 2 is in the retracted position, the mobile portion 21 will always adopt the normal operation position.

To that end, the aerodynamic device 1 comprises an over-center spring 5 coupling both portions 20 and 21 exerting a force on the mobile portion 21 such that said mobile portion 21 is maintained in one of the two stable operation positions.

The aerodynamic device of the invention is capable of preventing damage to the actuator and/or transmission mechanism in the event of an impact with a vertical force component, i.e., perpendicular to the movement of the vehicle, while at the same time keeping the flap in a stable position after sustaining the impact, which prevents annoying noises.

The term "over-center spring" refers to a bistable spring which, when subjected to forces in one direction or the other, stores energy and releases it, being urged to one of the two equilibrium positions. The over-center spring comprises a force threshold such that if it is subjected to a force that is lower than the force threshold, it is urged to stay in the equilibrium position it is already in, and if the force threshold is exceeded, it changes the direction of the force of the over-center spring and urges the over-center spring to the other equilibrium position.

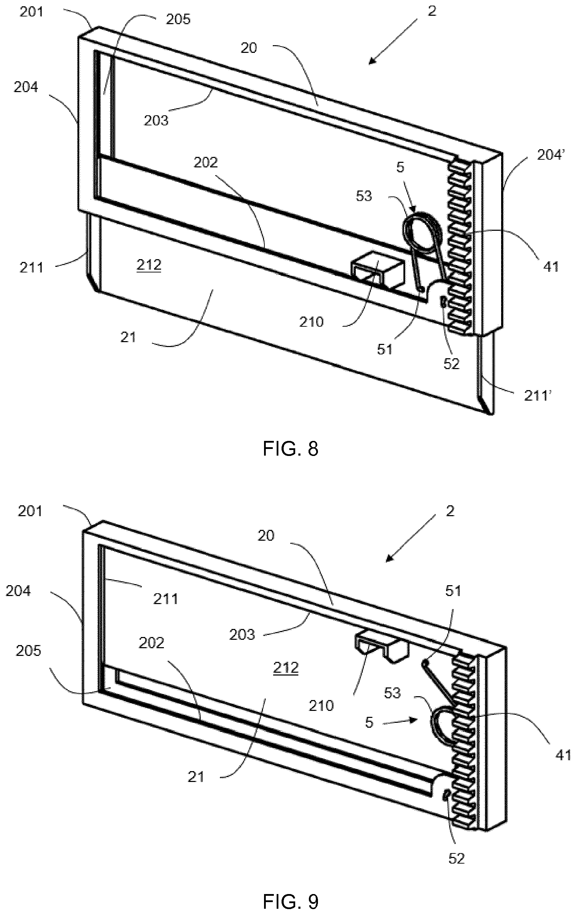

In this embodiment, the over-center spring 5 is a torsion helical spring comprising an elastic part arranged helically with two free ends 51 and 52 and several central coils 53, as can be seen in Figures 8 and 9. One free end 51 of the over-center spring 5 is attached to the fixed portion 20 of the flap 2 and the other free end 52 of the over-center spring 5 is attached to the mobile portion 21 of the flap 2, the central coils 53 establishing the force threshold of the over-center spring 5.

In other possible embodiments not shown in the drawings, another over-center spring working under compression or traction could be used, depending on whether or not its force threshold is exceeded.

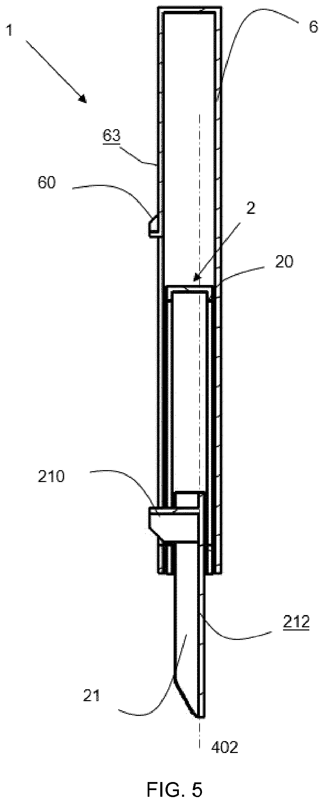

In the normal operation position shown in Figures 5 and 8, the over-center spring 5 is subjected to torsional forces in the clockwise direction exerting a separating force on the mobile portion 21 with respect to the fixed portion 20, i.e., the free end 52 attached to the mobile portion 21 is subjected to a clockwise torsional force pulling on the mobile portion 21 out of the casing 6, separating it from the fixed portion 20. When the flap 2 is arranged in the extended position and the mobile portion 21 is arranged in this normal operation position, the mobile portion 21 projects from the casing 6, as can be seen in Figures 1 and 2.

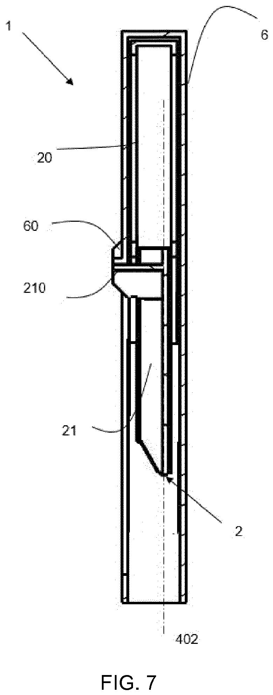

In the emergency operation position, shown in Figures 6 and 9, the over-center spring 5 is subjected to torsional forces in the counterclockwise direction, exerting a pulling force on the mobile portion 21 with respect to the fixed portion 20, i.e., the free end 52 attached to the mobile portion 21 is subjected to a counterclockwise torsional force pulling on the mobile portion 21 into the casing 6, pulling it towards the fixed portion 20. In this emergency operation position, the mobile portion 21 of the flap 2 is always housed for the most part inside the casing 6, as can be seen in Figures 6 and 7.

In addition to keeping the mobile portion 21 with respect to the fixed portion 20 in one of the two stable operation positions, the over-center spring 5 allows the mobile portion 21 to move from one stable operation position to the other. That is, it allows relative movement between the fixed portion 20 and the mobile portion 21 of the flap 2 when an inverse force exceeding the force threshold of the over-center spring 5 is exerted on the mobile portion 21.

Even at maximum speed, the dynamic airflow loads on the mobile portion 21 of the flap 2 must not exceed the force threshold of the over-center spring, whereby the over-center spring 5 is configured so that its force threshold is minimally higher than said loads.

In the event of exceeding the force threshold, the mobile portion 21 would move from one stable operation position to the other. Said force threshold of the over-center spring 5 may be exceeded, for example, when, with the flap 2 in the extended position, the mobile portion 21 of the flap 2 has sustained an impact with a sufficient vertical force component towards the inside of the casing 6. Therefore, in the event of collision with obstacles which may be present during regular transit, such as curbs, garbage, blocks of ice, or even small animals, the mobile portion 21 of the flap 2 would move from the normal operation position to the emergency operation position if the vertical force component were to exceed the force threshold.

Thereby, in the event of vertical impact, the over-center spring 5 allows temporarily decoupling the synchronous movement of both portions 20, 21 of the flap 2, allowing relative movement between the fixed portion 20 and the mobile portion 21 of the flap 2, such that the over-center spring 5 absorbs the collision force and prevents said collision force from striking the actuator 3 and/or transmission mechanism 4 and damaging them.

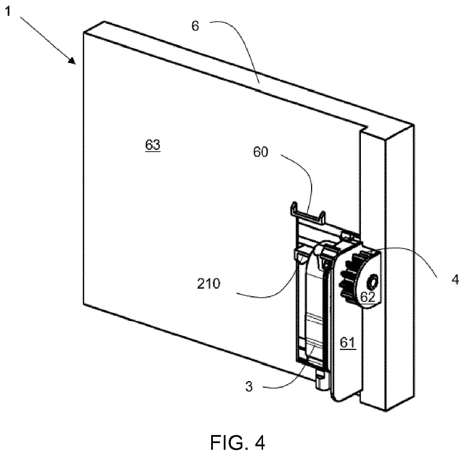

As described above, after an impact with the force with a sufficient vertical force component, the mobile portion 21 of the flap 2 moves to the emergency operation position shown in Figures 4 and 6. Therefore, in this emergency position, the flap 2 is housed for the most part inside the casing 6.

In this embodiment, to enable returning the mobile portion 21 to the normal operation position, the mobile portion 21 comprises a stop 210 configured for cooperating with a reset stop 60 to return the mobile portion 21 to the normal operation position. That is, in the event that the mobile portion 21 has moved to the emergency operation position, as the flap 2 moves from the extended position to the retracted position, the stop 210 of the mobile portion 21 abuts with the reset stop 60 and the mobile portion 21 moves from the emergency operation position to the normal operation position. The flap 2 is thereby reset, adopting the normal operation position, as shown in Figures 3 and 7.

In this embodiment of the invention, the reset stop 60 is arranged in the casing 6 configured for housing the flap 2. In other possible embodiments, the reset stop could also be arranged at other fixed points of the low part of the motor vehicle such as the body or the bumper, provided that they may cooperate with the stop of the mobile portion.

In this embodiment, the casing 6, shown in Figures 2, 3, 4, and 5, comprises a main surface 63 parallel to the central surface 212 of the flap 2. In this embodiment, the stop 210 associated with the mobile portion 21 extends past the main surface 63 of the casing 6, whereas the reset stop 60 of the casing 6 extends perpendicular to the main surface 63 of the casing 6.

When the mobile portion 21 is in the emergency operation position, as the flap 2 moves from the extended position to the retracted position, the stop 210 of the mobile portion 21 abuts with the reset stop 60 of the casing 6, said stops exerting a sufficient force on the over-center spring 5 for exceeding its force threshold and returning the mobile portion 21 to the normal operation position.

In this embodiment, the flap 2 is introduced in the casing 6 as it moves from the extended position to the retracted position with the transmission mechanism 4. Preferably, the fixed portion 20 of the flap 2 fundamentally carries out a linear movement between the retracted position and the extended position, just as the mobile portion 21 moves between the respective operation positions.

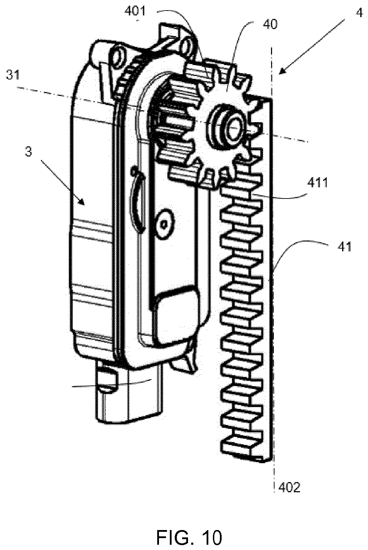

It can be seen in Figures 5 and 6 that in this embodiment the fixed portion 20 and the mobile portion 21 move along one and the same sliding axis 402 and in turn parallel to the main surface 63 of the casing 6, to obtain a simple construction and assembly taking up little space. To that end, the actuator 3 and a first portion 40 of the transmission mechanism 4 are arranged on the casing 6, and a second portion 41 of the transmission mechanism 4 is arranged on the fixed portion 20 of the flap 2, as can be seen in Figures 2 and 10.

In this embodiment, the casing 6 comprises two fixing surfaces 61 and 62 which extend from the main surface 63 perpendicular thereto and which are parallel to one another, as shown in Figure 2. The actuator 3 is arranged on a fixing surface 61 and the first portion 40 of the transmission mechanism 4 is arranged on the other fixing surface 62.

In the embodiment, the actuator 3 is a rotating actuator the output of which is coupled to the first portion 40 of the transmission mechanism 4, which in this case is a gear wheel 401 and the second portion 41 of the transmission mechanism is a rack with projections 411, the first portion 40 and the second portion 41 forming a rack and pinion mechanism, as shown in Figure 10. The second portion 41 is arranged in the fixed portion 20 in the direction of the movement axis 402 and the first portion 40 is arranged with its axis of rotation 31 perpendicular to the movement axis 402.

In this embodiment, the fixed portion 20 of the flap 2 comprises a frame 201 the contour of which, with a lower segment 202 and an upper segment 203, delimits the movement of the mobile portion 21 on the fixed portion 20 between the normal operation position and the emergency position. Therefore, the stop 210 of the mobile portion 21 abuts with the lower segment 202 when the mobile portion 21 is arranged in the normal operation position, and abuts with the upper segment 203 of said frame 201 when the mobile portion 21 is arranged in the emergency position. In this embodiment, the central area of the frame 201 is hollow in order to arrange the stop 210 in its central area.

In this embodiment, the over-center spring 5 is exerting a clockwise or counterclockwise torsional force on the mobile portion 21 which pushes the stop 210 of the mobile portion towards the lower segment 202 or the upper segment 203 of the frame 201. These segments 202 and 203 assure a fixing prestress between the fixed portion 20 and the mobile portion 21. Said prestress would assure stable fixing of the mobile portion 21 in either of the two operation positions without any degree of freedom or vibration between the portions 20 and 21 which result in annoying noises. The position of the stop 210 in the mobile portion 21 is defined so that this fixing prestress is lower than the force threshold of the over-center spring 5.

Preferably, the frame 201 of the fixed portion 20 of the flap 2 also comprises two side walls 204 and 204', in which there are arranged guiding means laterally guiding the flap 2 in its movement between the normal operation position and the emergency operation position. Specifically, in this embodiment, the guiding means are channels 205 in which the lateral ends 211 and 211' of the mobile portion 21 are at least partially housed, as shown in Figures 8 and 9. Therefore, when the mobile portion 21 is in normal operation position and receives a sufficient collision to exceed the force threshold of the over-center spring 5, the side walls 204 and 204' of the mobile portion 21 slide in the channels 205 of the fixed portion 20 to the emergency position in which the mobile portion 21 is for the most part housed between the channels 205 of the fixed portion 20, achieving a compact configuration of the aerodynamic device 1.

In other possible embodiments, the guiding means can be carried out in any manner known to one skilled in the art.

In this embodiment, the second portion 41 of the transmission mechanism 4 is arranged in one of the side walls 204, 204' of the frame 201. However, this arrangement of the second portion 41 is not intended to limit the present invention.

The invention also relates to a motor vehicle comprising at least one aerodynamic device 1 such as the one described above.

## Claims

1. Aerodynamic device for a motor vehicle, comprising
- a flap (2) movable between an extended position and a retracted position,
- a rotating actuator (3), and
- a transmission mechanism (4) coupled to the actuator (3) and configured for transmitting the movement of the actuator (3) to the flap (2),
- the aerodynamic device (1) being configured for preventing the actuator (3) and/or transmission mechanism (4) from being damaged in the event that the flap (2) receives an impact when said flap (2) is arranged in the extended position,
**characterized in that**
- the flap (2) comprises a fixed portion (20) coupled to the transmission mechanism (4), and a mobile portion (21) coupled to the fixed portion (20) in a manner that is movable between a normal operation position and an emergency operation position, and
- the aerodynamic device (1) comprises an over-center spring (5) coupling the fixed portion (20) and the mobile portion (21) of the flap (2) and exerting a force on the mobile portion (21) such that said mobile portion (21) is maintained in one of the two operation positions,
- the over-center spring (5) allowing the movement of the mobile portion (21) of the flap (2) to the emergency operation position when the mobile portion (21) receives an impact with a vertical force component exceeding a force threshold of the over-center spring (5).

2. Aerodynamic device according to claim 1, wherein the mobile portion (21) of the flap (2) comprises a stop (210) configured for cooperating with a reset stop (60), such that, when the flap (2) moves from the extended position to the retracted position, in the event that the mobile portion (21) has moved to the emergency operation position, the stop (210) of the mobile portion (21) abuts with the reset stop (60), the reset stop (60) moving the mobile portion (21) from the emergency operation position to the normal operation position.

3. Aerodynamic device according to claim 2, comprising a casing (6) configured for housing the flap (2), the reset stop (60) being arranged in said casing (6).

4. Aerodynamic device according to claim 3, wherein the actuator (3) and part of the transmission mechanism (4) are arranged on the casing (6), and the other part of the transmission mechanism (4) is arranged on the fixed portion (20) of the flap (2), such that the flap (2) is introduced in the casing (6) as it moves from the extended position to the retracted position with the transmission mechanism (4).

5. Aerodynamic device according to any of claims 2 to 4, wherein the fixed portion (20) comprises a frame (201) the contour of which delimits the movement of the mobile portion (21) on the fixed portion (20), the stop (210) of the mobile portion (21) abutting with a lower segment of the frame (201) when the mobile portion (21) is arranged in the normal operation position, and said stop (210) of the mobile portion (21) abutting with an upper segment of said frame (201) when the mobile portion (21) is arranged in the emergency position.

6. Aerodynamic device according to claim 5, wherein the frame (201) comprises side segments laterally guiding the mobile portion (4).

7. Aerodynamic device according to claim 6, wherein the side segments of the frame (201) comprise channels (205) in which the lateral ends of the mobile portion (21) are housed.

8. Motor vehicle **characterized in that** it comprises at least one aerodynamic device (1) according to any of the preceding claims.

## Patentansprüche

1. Aerodynamische Vorrichtung für ein Kraftfahrzeug, umfassend
- eine zwischen einer ausgefahrenen und einer eingefahrenen Position bewegliche Klappe (2),
- ein rotierendes Stellglied (3) und
- einen mit dem Stellglied (3) verbundenen Übertragungsmechanismus (4), der zur Übertragung der Bewegung des Stellglieds (3) auf die Klappe (2) ausgelegt ist, wobei die aerodynamische Vorrichtung (1) so ausgelegt ist, dass bei einem Stoß auf die Klappe (2), wenn sich die genannte Klappe (2) in der ausgefahrenen Position befindet, eine Beschädigung des Stellglieds (3) und/oder des Übertragungsmechanismus (4) verhindert wird,
**dadurch gekennzeichnet, dass**
- die Klappe (2) einen mit dem Übertragungsmechanismus (4) verbundenen feststehenden Bereich (20) und einen mit dem feststehenden Bereich (20) verbundenen beweglichen Bereich (21), welcher zwischen einer normalen Betriebsposition und einer Notbetriebsposition bewegbar ist, umfasst und
- die aerodynamische Vorrichtung (1) eine Schnappfeder (5) umfasst, die den feststehenden Bereich (20) und den beweglichen Bereich (21) der Klappe (2) verbindet und auf den beweglichen Bereich (21) eine Kraft ausübt, sodass der genannte bewegliche Bereich (21) in einer der beiden Betriebspositionen gehalten wird,
- die Schnappfeder (5) die Bewegung des beweglichen Bereichs (21) der Klappe (2) in die Notbetriebsposition ermöglicht, wenn der bewegliche Bereich (21) einen Stoß mit einer eine Kraftschwelle der Schnappfeder (5) überschreitenden vertikalen Kraftkomponente erhält.

2. Aerodynamische Vorrichtung nach Anspruch 1, bei der der bewegliche Bereich (21) der Klappe (2) einen Anschlag (210) aufweist, der zum Zusammenwirken mit einem Rückstellanschlag (60) ausgelegt ist, sodass bei einer Bewegung der Klappe (2) von der ausgefahrenen Position in die eingefahrene Position nach erfolgter Bewegung des beweglichen Bereichs (21) in die Notbetriebsposition der Anschlag (210) des beweglichen Bereichs (21) an den Rückstellanschlag (60) anstößt und der Rückstellanschlag (60) den beweglichen Bereich (21) von der Notbetriebsposition in die normale Betriebsposition bewegt.

3. Aerodynamische Vorrichtung nach Anspruch 2, die ein zur Aufnahme der Klappe (2) ausgelegtes Gehäuse (6) umfasst, wobei der Rückstellanschlag (60) in dem genannten Gehäuse (6) untergebracht ist.

4. Aerodynamische Vorrichtung nach Anspruch 3, wobei das Stellglied (3) und ein Teil des Übertragungsmechanismus (4) auf dem Gehäuse (6) angeordnet sind und der andere Teil des Übertragungsmechanismus (4) auf dem feststehenden Bereich (20) der Klappe (2) angeordnet ist, sodass die Klappe bei ihrer Bewegung zusammen mit dem Übertragungsmechanismus (4) von der ausgefahrenen Position in die eingezogene Position in das Gehäuse (6) eingeschoben wird.

5. Aerodynamische Vorrichtung nach einem der Ansprüche 2 bis 4, bei der der feststehende Bereich (20) einen Rahmen (201) aufweist, dessen Umrisse die Bewegung des beweglichen Bereichs (21) auf dem feststehenden Bereich (20) begrenzen, wobei der Anschlag (210) des beweglichen Bereichs (21) an ein unteres Segment des Rahmens (201) anstößt, wenn sich der bewegliche Bereich (21) in der normalen Betriebsposition befindet, und der genannte Anschlag (210) des beweglichen Bereichs (21) an ein oberes Segment des genannten Rahmens (201) anstößt, wenn sich der bewegliche Bereich (21) in der Notbetriebsposition befindet.

6. Aerodynamische Vorrichtung nach Anspruch 5, wobei der Rahmen (201) Seitensegmente zur seitlichen Führung des beweglichen Bereichs (4) aufweist.

7. Aerodynamische Vorrichtung nach Anspruch 6, bei der die Seitensegmente des Rahmens (201) Kanäle (205) zur Aufnahme der seitlichen Enden des beweglichen Bereichs (21) aufweisen.

8. Kraftfahrzeug, **dadurch gekennzeichnet, dass** es mindestens eine aerodynamische Vorrichtung (1) nach einem der vorstehenden Ansprüche umfasst.

## Revendications

1. Dispositif aérodynamique pour un véhicule à moteur, comprenant
- un volet (2) mobile entre une position déployée et une position rétractée,
- un actionneur rotatif (3), et
- un mécanisme de transmission (4) couplé à l'actionneur (3) et configuré pour transmettre le mouvement de l'actionneur (3) au volet (2), le dispositif aérodynamique (1) étant configuré pour empêcher l'actionneur (3) et/ou le mécanisme de transmission (4) d'être endommagé dans le cas où le volet (2) reçoit un impact lorsque ledit volet (2) est disposé dans la position étendue,
**caractérisé en ce que**
- le volet (2) comprend une partie fixe (20) couplée au mécanisme de transmission (4), et une partie mobile (21) couplée à la partie fixe (20) d'une manière qui est mobile entre une position de fonctionnement normal et une position de fonctionnement d'urgence, et
- le dispositif aérodynamique (1) comprend un ressort excentré (5) couplant la partie fixe (20) et la partie mobile (21) du volet (2) et exerçant une force sur la partie mobile (21) de sorte que ladite partie mobile (21) est maintenue dans l'une des deux positions de fonctionnement,
- le ressort excentré (5) permettant le déplacement de la partie mobile (21) du volet (2) vers la position de fonctionnement d'urgence lorsque la partie mobile (21) reçoit un impact avec une composante de force verticale dépassant un seuil de force du ressort excentré (5).

2. Dispositif aérodynamique selon la revendication 1, dans lequel la partie mobile (21) du volet (2) comprend une butée (210) configurée pour coopérer avec une butée de réinitialisation (60), de sorte que, lorsque le volet (2) se déplace de la position étendue à la position rétractée, dans le cas où la partie mobile (21) s'est déplacée vers la position de fonctionnement d'urgence, la butée (210) de la partie mobile (21) bute contre la butée de réinitialisation (60), la butée de réinitialisation (60) déplaçant la partie mobile (21) de la position de fonctionnement d'urgence à la position de fonctionnement normal.

3. Dispositif aérodynamique selon la revendication 2, comprenant un boîtier (6) configuré pour recevoir le volet (2), la butée de réarmement (60) étant disposée dans ledit boîtier (6).

4. Dispositif aérodynamique selon la revendication 3, dans lequel l'actionneur (3) et une partie du mécanisme de transmission (4) sont disposés sur le boîtier (6), et l'autre partie du mécanisme de transmission (4) est disposée sur la partie fixe (20) du volet (2), de sorte que le volet (2) est introduit dans le boîtier (6) lorsqu'il passe de la position déployée à la position rétractée avec le mécanisme de transmission (4).

5. Dispositif aérodynamique selon l'une quelconque des revendications 2 à 4, dans lequel la partie fixe (20) comprend un cadre (201) dont le contour délimite le déplacement de la partie mobile (21) sur la partie fixe (20), la butée (210) de la partie mobile (21) étant en butée avec un segment inférieur du cadre (201) lorsque la partie mobile (21) est disposée en position normale de fonctionnement, et ladite butée (210) de la partie mobile (21) étant en butée avec un segment supérieur dudit cadre (201) lorsque la partie mobile (21) est disposée en position de secours.

6. Dispositif aérodynamique selon la revendication 5, dans lequel le cadre (201) comprend des segments latéraux guidant latéralement la partie mobile (4).

7. Dispositif aérodynamique selon la revendication 6, dans lequel les segments latéraux du cadre (201) comprennent des canaux (205) dans lesquels sont logées les extrémités latérales de la partie mobile (21).

8. Véhicule automobile **caractérisé en ce qu'il** comprend au moins un dispositif aérodynamique (1) selon l'une quelconque des revendications précédentes.
